# EUROPEAN PATENT APPLICATION

(11) **EP 4 734 466 A1**
(43) Date of publication of application: **29.04.2026**
(21) Application number: 23946216.1
(22) Date of filing: 26.07.2023
(51) Int. Cl.: H04L 41/0853

(54) **ASSET IDENTIFICATION METHOD AND APPARATUS, AND ELECTRONIC DEVICE AND STORAGE MEDIUM**

(71) Applicant: Siemens Aktiengesellschaft, 80333 München (DE)
(72) Inventor: GUO, Daifei, Chaoyang District, Beijing 100102 (CN)
(74) Representative: Isarpatent
(86) International application number: PCT/CN2023/109350
(87) International publication number: WO 2025/020129

(57) **Abstract**

The embodiments of the present invention disclose an asset identification method and apparatus, an electronic device, and a storage medium. The method includes: obtaining network traffic related to a to-be-identified asset device; obtaining identification information of the to-be-identified asset device based on the network traffic; and generating an identification result of the to-be-identified asset device based on the identification information, where the identification result includes an application scenario description of the to-be-identified asset device. The identification result includes the application scenario description, so that identification results are enriched, thereby facilitating detailed understanding of assets and facilitating security analysis and impact evaluation.

## Description

### TECHNICAL FIELD

The present invention relates to the technical field of asset management, and in particular, to an asset identification method and apparatus, an electronic device, and a storage medium.

### BACKGROUND

Many Internet of Things (IoT) assets (also referred to as devices) are connected to an industrial Ethernet in an operation technology (OT) system. In OT security monitoring, detailed information about assets is very important, and may be used, for example, for risk analysis and threat impact evaluation of a system.

However, because various assets have different performance and many protocols are widely applied, it is difficult to obtain detailed information of assets (for example, an OT asset and/or an IoT asset) currently.

### SUMMARY

The embodiments of the present invention provide an asset identification method and apparatus, an electronic device, and a storage medium.

An asset identification method includes:
obtaining network traffic related to a to-be-identified asset device;
obtaining identification information of the to-be-identified asset device based on the network traffic; and
generating an identification result of the to-be-identified asset device based on the identification information, where the identification result includes an application scenario description of the to-be-identified asset device.

Therefore, the identification information is extracted from the network traffic related to the to-be-identified asset device, and the identification result including the application scenario description is generated based on the identification information, so that identification result is enriched, thereby facilitating detailed understanding of assets by a user, deepening the degree of cognition of the assets by the user, and facilitating security analysis and impact evaluation.

In an embodiment, the to-be-identified asset device is an OT device and/or an IoT device.

The obtaining network traffic related to a to-be-identified asset device includes:
obtaining, by using a monitoring port on a switch connected to the OT device and/or the IoT device, mirror traffic of network traffic flowing through the switch within a predetermined time.

Therefore, the network traffic of the OT device and/or the IoT device can be conveniently obtained by using the mirror traffic of the switch.

In an embodiment, the obtaining identification information of the to-be-identified asset device includes: extracting, when a protocol type of the network traffic supports a definition of identification information in a standard format, the identification information from a field interval in the network traffic and corresponding to a predetermined type, where the identification information is in the standard format, and the standard format includes an application scenario identification field, a location identification field, and a usage identification field; and the generating an identification result of the to-be-identified asset device based on the identification information includes: matching first content in the application scenario identification field with a predefined application scenario mapping relationship, to determine an application scenario description of the to-be-identified asset device and corresponding to the first content; matching second content in the location identification field with a predefined location mapping relationship, to determine a location description of the to-be-identified asset device and corresponding to the second content; and matching third content in the usage identification field with a predefined usage mapping relationship, to determine a usage description of the to-be-identified asset device and corresponding to the content in the usage identification field.

Therefore, for the network traffic supporting the identification information in the standard format, the identification result including the application scenario description, the location description, and the usage description can be conveniently obtained based on the identification information.

In an embodiment, the obtaining identification information of the to-be-identified asset device includes: extracting, when the protocol type of the network traffic does not support the definition of the identification information in the standard format, a feature group of the network traffic; and the generating an identification result of the to-be-identified asset device based on the identification information includes: determining an application scenario description of the to-be-identified asset device based on a matching result between the feature group and a predetermined scenario matching rule.

In view of the above, for the network traffic not supporting the identification information in the standard format, the application scenario description can be determined by using the matching result between the feature group and the predetermined scenario matching rule.

In an embodiment, the obtaining identification information of the to-be-identified asset device includes: querying, when the protocol type of the network traffic does not support the definition of the identification information in the standard format and is included in a predetermined field interval mapping relationship, the field interval mapping relationship based on the protocol type, to determine a location field interval and a usage field interval that correspond to the protocol type, where the location field interval adaptively stores a location description of the to-be-identified asset device, and the usage field interval adaptively stores a usage description of the to-be-identified asset device; and the generating an identification result of the to-be-identified asset device based on the identification information includes: extracting the location description from the location field interval; and extracting the usage description from the usage field interval.

Therefore, for the network traffic not supporting the identification information in the standard format, the usage description and the location description can be conveniently extracted by using the field interval mapping relationship.

In an embodiment, a generation manner of the scenario matching rule includes at least one of the following:
generating the scenario matching rule based on a combination of at least two features in the feature group;
generating the scenario matching rule based on a combination of at least two features in the feature group and a keyword in the location description; or
generating the scenario matching rule based on a combination of at least two features in the feature group and a keyword in the usage description,
where the feature group includes at least two of the following features: a network address; a program identifier; a common flag in the network traffic; a transmission control protocol port state; or a user datagram protocol port state.

Therefore, the scenario matching rule is generated in a plurality of manners, thereby improving the applicability and the richness of the scenario matching rule.

In an embodiment, the rule includes:
when the protocol type of the network traffic does not support the definition of the identification information in the standard format and is not included in the field interval mapping relationship: determining, from the network traffic based on a predetermined location description keyword, a location field interval used for storing the location description; determining, from the network traffic based on a predetermined usage keyword, a usage field interval used for storing the usage description; and newly adding a mapping relationship between the location field interval and the protocol type and a mapping relationship between the usage field interval and the protocol type to the field interval mapping relationship.

In view of the above, for a protocol type not recorded in the field interval mapping relationship, the usage field interval and the location field interval can be obtained by parsing, and the mapping relationship with the protocol type is newly added to the field interval mapping relationship, thereby automatically expanding the field interval mapping relationship.

An asset identification apparatus includes:
a traffic obtaining module, configured to obtain network traffic related to a to-be-identified asset device;
an information obtaining module, configured to extract identification information of the to-be-identified asset device based on the network traffic; and
a generation module, configured to generate an identification result of the to-be-identified asset device based on the identification information, where the identification result includes an application scenario description of the to-be-identified asset device.

Therefore, the identification information is extracted from the network traffic related to the to-be-identified asset device, and the identification result including the application scenario description is generated based on the identification information, so that identification result are enriched, thereby facilitating detailed understanding of assets by a user, deepening the degree of cognition of the assets by the user, and facilitating security analysis and impact evaluation.

In an embodiment, the to-be-identified asset device is an OT device and/or an IoT device.

The traffic obtaining module is configured to obtain, by using a monitoring port on a switch connected to the OT device and/or the IoT, mirror traffic of network traffic flowing through the switch within a predetermined time.

Therefore, the network traffic of the OT device and/or the IoT device can be conveniently obtained by using the mirror traffic of the switch.

In an embodiment, the information obtaining module is configured to obtain, when a protocol type of the network traffic supports a definition of identification information in a standard format, the identification information from a field interval in the network traffic and corresponding to a predetermined type, where the identification information is in the standard format, and the standard format includes an application scenario identification field, a location identification field, and a usage identification field; and the generation module is configured to match first content in the application scenario identification field with a predefined application scenario mapping relationship, to determine an application scenario description of the to-be-identified asset device and corresponding to the first content; match second content in the location identification field with a predefined location mapping relationship, to determine a location description of the to-be-identified asset device and corresponding to the second content; and match third content in the usage identification field with a predefined usage mapping relationship, to determine a usage description of the to-be-identified asset device and corresponding to the content in the usage identification field.

Therefore, for the network traffic supporting the identification information in the standard format, the identification result including the application scenario description, the location description, and the usage description can be conveniently obtained based on the identification information.

In an embodiment, the information obtaining module is configured to extract, when the protocol type of the network traffic does not support the definition of the identification information in the standard format, a feature group of the network traffic; and the generation module is configured to determine an application scenario description of the to-be-identified asset device based on a matching result between the feature group and a predetermined scenario matching rule.

In view of the above, for the network traffic not supporting the identification information in the standard format, the application scenario description can be determined by using the matching result between the feature group and the predetermined scenario matching rule.

In an embodiment, the information obtaining module is configured to query, when the protocol type of the network traffic does not support the definition of the identification information in the standard format and is included in a predetermined field interval mapping relationship, the field interval mapping relationship based on the protocol type, to determine a location field interval and a usage field interval that correspond to the protocol type, where the location field interval adaptively stores a location description of the to-be-identified asset device, and the usage field interval adaptively stores a usage description of the to-be-identified asset device; and the generation module is configured to extract the location description from the location field interval; and extract the usage description from the usage field interval.

Therefore, for the network traffic not supporting the identification information in the standard format, the usage description and the location description can be conveniently extracted by using the field interval mapping relationship.

In an embodiment, the generation manner of the scenario matching rule includes at least one of the following: generating the scenario matching rule based on a combination of at least two features in the feature group; and generating the scenario matching rule based on a combination of at least two features in the feature group and a keyword in the location description; or
generating the scenario matching rule based on a combination of at least two features in the feature group and a keyword in the usage description,
where the feature group includes at least two of the following features: a network address; a program identifier; a common flag in the network traffic; a transmission control protocol port state; or a user datagram protocol port state.

Therefore, the scenario matching rule is generated in a plurality of manners, thereby improving the applicability and the richness of the scenario matching rule.

In an embodiment, the information obtaining module is configured to: when the protocol type of the network traffic does not support the definition of the identification information in the standard format and is not included in the field interval mapping relationship: determine, from the network traffic based on a predetermined location description keyword, a location field interval used for storing the location description; determine, from the network traffic based on a predetermined usage keyword, a usage field interval used for storing the usage description; and newly add a mapping relationship between the location field interval and the protocol type and a mapping relationship between the usage field interval and the protocol type to the field interval mapping relationship.

In view of the above, for a protocol type not recorded in the field interval mapping relationship, the usage field interval and the location field interval can be obtained by parsing, and the mapping relationship with the protocol type is newly added to the field interval mapping relationship, thereby automatically expanding the field interval mapping relationship.

An electronic device includes:
a processor; and
a memory, configured to store executable instructions of the processor;
the processor being configured to: read the executable instructions from the memory, and execute the executable instructions to implement the asset identification method according to any one of the foregoing aspects.

A computer-readable storage medium, having computer instructions stored thereon, where the computer instructions, when executed by a processor, implement the log-based method for identifying an attack link according to any one of the foregoing aspects.

A computer program product, including a computer program, where the computer program, when executed by a processor, implements the asset identification method according to any one of the foregoing aspects.

### BRIEF DESCRIPTION OF THE DRAWINGS

To enable a person of ordinary skill in the art to understand the foregoing and other features and advantages of the present invention more clearly, exemplary embodiments according to the present invention are described in detail below with reference to the accompany drawings. In the accompanying drawings:
FIG. 1 is a flowchart of an asset identification method according to an embodiment of the present invention;
FIG. 2 is an exemplary schematic diagram of obtaining network traffic according to an embodiment of the present invention;
FIG. 3 is a first exemplary flowchart of an asset identification process according to an embodiment of the present invention;
FIG. 4 is a second exemplary flowchart of an asset identification process according to an embodiment of the present invention;
FIG. 5 is a structural diagram of an asset identification apparatus according to an embodiment of the present invention; and
FIG. 6 is a structural diagram of an electronic device according to an embodiment of the present invention.

Reference numerals are as follows:

| Numerals | Meanings |
|---|---|
| 101-103 | Step |
| 10 | first IoT system |
| 11 | IoT device |
| 12 | switch |
| 20 | second IoT system |
| 21 | IoT device |
| 22 | PLC |
| 23 | switch |
| 30 | OT system |
| 31 | OT device |
| 32 | switch |
| 14/15 | data collector |

| | |
|---|---|
| 16 | analysis platform |
| 301-307 | step |
| 401-408 | step |
| 500 | asset identification apparatus |
| 501 | traffic obtaining module |
| 502 | information obtaining module |
| 503 | generation module |
| 600 | electronic device |
| 601 | processor |
| 602 | memory |

### DETAILED DESCRIPTION

To make the objective, technical solutions, and advantages of the present invention clearer, the present invention is further described in detail below by using embodiments.

For brief and intuitive description, the following describes the solutions of the present invention by describing several representative embodiments. The large number of details in the embodiments are only used to help understand the solutions of the present invention. However, obviously, implementation of the technical solutions of the present invention may not be limited to these details. To avoid unnecessarily obscuring the solutions of the present invention, some embodiments are not described in detail, but only frameworks are provided. In the following description, "including" means "including, but is not limited to", and "according to..." means "at least according to..., but is not limited to merely according to...". Due to the Chinese language habit, when the number of an element is not particularly specified below, it means that there may be one or more such elements, or there may be at least one such element.

Currently, the requirement on automatic identification of assets (also referred to as devices or asset devices) increasingly becomes higher. It is to be noted that any one of an IT system, an IoT system, an OT system, or an IT/OT integrated system has a requirement on automatic asset identification. Especially, in the OT system, the IoT system, or the IT/OT integrated system, due to the fact that many important attributes of an OT asset cannot be directly obtained, the requirement on automatic asset identification is particularly strong, and the implementation difficulty is also high.

An embodiment of the present invention provides an asset identification solution based on scenario awareness, to directly extract or indirectly obtain identification information from network traffic related to a to-be-identified asset device, and generate, based on the identification information, an identification result including an application scenario description, thereby facilitating detailed understanding of assets by a user, deepening the degree of cognition of the assets by the user, and facilitating security analysis and impact evaluation.

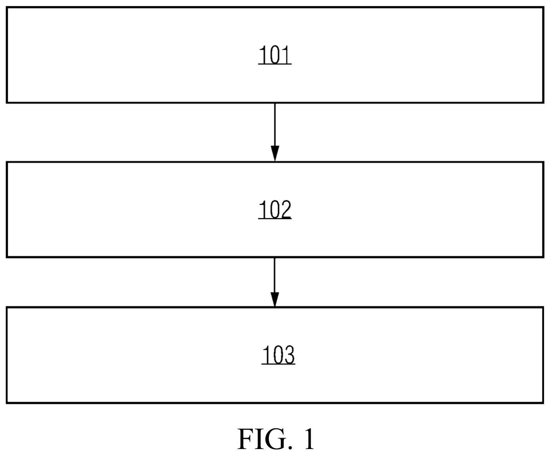

FIG. 1 is a flowchart of an asset identification method according to an embodiment of the present invention. As shown in FIG. 1, the method includes:
Step 101: Obtain network traffic related to a to-be-identified asset device.

Here, the to-be-identified asset device may be an IT device in an IT system, an OT device in an OT system, an IT device in an IT/OT integrated system, an OT device in an IT/OT integrated system, an IoT device in an IoT system, or the like.

A protocol for the network traffic transmitted between to-be-identified asset devices may include: a transfer protocol and a communications protocol. The transfer protocol is generally responsible for networking and communication between devices in a sub-network. The communications protocol is mainly a device communications protocol running on a TCP/IP protocol, and is responsible for data exchange and communication between devices via the Internet. For example, the transfer protocol for transmitting the network traffic may include: a representational state transfer (REST)/hyper text transfer protocol, a constrained application protocol (CoAP), a message queuing telemetry transport (MQTT) protocol, a data distribution service for real-time systems (DDS) protocol, an advanced message queuing protocol (AMQP), an extensible messaging and presence protocol (XMPP), a Java message service (JMS) protocol, and the like. Still for example, the communications protocol may be implemented as an industrial Ethernet (PROFINET) protocol, a Modbus protocol, a BACNet protocol, an RS-232 protocol, a HART protocol, an MPI protocol, an RS-485 protocol, or the like.

In an embodiment, the to-be-identified asset device is an OT device or an IoT device. Step 101 specifically includes: obtaining, by using a monitoring port on a switch connected to the OT device and/or the IoT device, mirror traffic of network traffic flowing through the switch within a predetermined time.

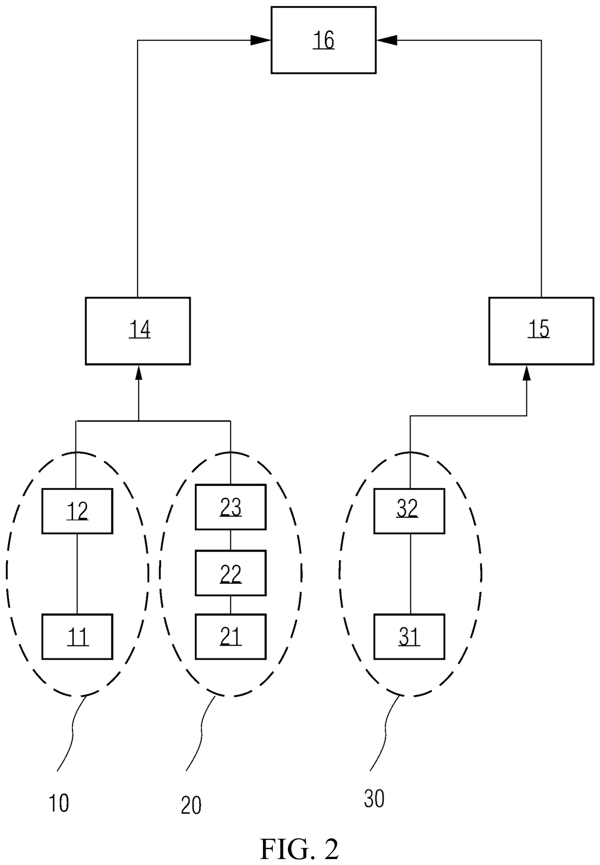

FIG. 2 is an exemplary schematic diagram of obtaining network traffic according to an embodiment of the present invention. In FIG. 2, a first IoT system 10 includes an IoT device 11 and a switch 12 connected to the IoT device 11. A second IoT system 20 includes an IoT device 21, a programmable logic controller (PLC) 22 connected to the IoT device 21, and a switch 23 connected to the PLC 22. An OT system 30 includes an OT device 31 and a switch 32 connected to the OT device 31. The switch 12 and the switch 23 are connected to a data collector 14. The switch 32 is connected to a data collector 15. The data collector 14 and the data collector 15 are respectively connected to an analysis platform 16.

The data collector 14 may obtain network traffic (including an ingress direction and an outgress direction) of the IoT device 11 by using a mirror traffic port disposed on the switch 12. The data collector 15 may obtain network traffic (including an ingress direction and an outgress direction) of the IoT device 21 by using a mirror traffic port disposed on the switch 23. The data collector 15 may obtain network traffic (including an ingress direction and an outgress direction) of the OT device 31 by using a mirror traffic port disposed on the switch 32. The data collector 14 and the data collector 15 separately send the traffic obtained by the data collector 14 and the data collector 15 to the analysis platform 16.

The foregoing exemplarily describes the protocols for transmitting network traffic and the specific examples of obtaining the network traffic. A person skilled in the art could realize that such the descriptions are merely exemplary and are not used to limit the protection scope of the embodiments of the present invention.

Step 102: Obtain identification information of the to-be-identified asset device based on the network traffic.

For example, in the architecture shown in FIG. 2, the analysis platform 16 may specifically perform step 102. Here, the identification information of the to-be-identified asset device may be directly extracted from the network traffic in a traffic parsing manner, or the identification information of the to-be-identified asset device may be indirectly obtained based on an attribute of the network traffic. The identification information is information used for generating an identification result of the to-be-identified asset device. For example:
(1) When the protocol type supports a definition of identification information in a standard format, the identification information is specifically implemented as a combined field in the standard format. In these protocol types, a definition of the combined field in the standard format is newly added. For example, the protocol types for which the definition of the combined field may be newly added may include: a PROFINET protocol, a Modbus protocol, a BACNet protocol, an RS-232 protocol, a HART protocol, an MPI protocol, an RS-485 protocol, and the like. The combined field may specifically include: an application scenario identification field, a location identification field, and a usage identification field. Content in the application scenario identification field is used for representing an application scenario of the to-be-identified asset device, for example, implemented as a character string corresponding to the application scenario description. Content in the location identification field is used for representing a location of the to-be-identified asset device, for example, implemented as a character string corresponding to the location description. Content in the usage identification field is used for representing a usage of the to-be-identified asset device, for example, implemented as a character string corresponding to the usage description. Specific content in the application scenario identification field, the location identification field, and the usage identification field may be filled in by a user in a startup or initialization process of the to-be-identified asset device. The combined field may be set at a fixed location (where the fixed location is convenient for quickly locating the identification information) of a predetermined-type packet in the communications protocol of the predetermined type, for example, set in a payload part of the packet. For example, for the PROFINET protocol, the combined field may be located in a payload part of a handshake packet. For the BACnet protocol, the combined field may be located in a payload part of a Who-is packet. Preferably, the combined field of the identification information in the standard format may further include another field used for identifying an asset attribute. For example, these asset attributes may include: a system name, a system usage, a subsystem usage, an asset device model, and the like. Correspondingly, specific content of fields of these asset attributes may be filled in by a user in a startup or initialization process of the to-be-identified asset device.
(2) When the protocol type of the network traffic does not support the definition of the identification information in the standard format, that is, there is no newly added definition of a combined field in the standard format to the protocol type, the identification information may be implemented as:
   (a): A feature group of the network traffic: a feature in the feature group may be implemented as: a network address; a program identifier; a common flag in the network traffic; a transmission control protocol port state; a user datagram protocol port state, and the like. (b): A location field interval and a usage field interval corresponding to the protocol type, where the location field interval adaptively stores a location description of the to-be-identified asset device, and the usage field interval adaptively stores a usage description of the to-be-identified asset device. Specifically, the common flag may include at least one of the following: (1) time to live (TTL): the TTL specifies a maximum quantity of network segments allowed to pass before an IP packet is discarded by a router. For example, the TTL in an IPv4 packet header is an 8-bit field, and is located in the ninth byte of the IPv4 packet. (2) Window size: (WinSize): A TCP header includes a window size field, which actually refers to a window of a receiving end, that is, a receiving window, and is used for notifying a sending end of a data volume that can be received, thereby implementing traffic control. (3) Don't fragment (DF) bit: DF bit: 1 indicates not fragmenting, and 0 indicates fragmenting. (4) Maximum segment size (MSS): The MMS is an option in the TCP Protocol, and is used for a maximum data length (not including a header) that can be borne by each packet segment during negotiated communication between two parties when a TCP connection is established. (5) Window scale factor (WinScale): The WinScale is located in an option field in a TCP header, and represents a multiple by which a window can be zoomed in. Similarly, the protocol types for which no definitions of the combined field in the standard format are newly added may include: a PROFINET protocol, a Modbus protocol, a BACNet protocol, an RS-232 protocol, a HART protocol, an MPI protocol, an RS-485 protocol, and the like.

Step 103: Generate an identification result of the to-be-identified asset device based on the identification information, where the identification result includes an application scenario description of the to-be-identified asset device.

In an embodiment, step 102 specifically includes: obtaining, when a protocol type of the network traffic supports a definition of identification information in a standard format, the identification information from a field interval in the network traffic and corresponding to a predetermined type, where the identification information is in the standard format, and the standard format includes an application scenario identification field, a location identification field, and a usage identification field. Step 103 specifically includes: matching first content in the application scenario identification field with a predefined application scenario mapping relationship, to determine an application scenario description of the to-be-identified asset device and corresponding to the first content; matching second content in the location identification field with a predefined location mapping relationship, to determine a location description of the to-be-identified asset device and corresponding to the second content; and matching third content in the usage identification field with a predefined usage mapping relationship, to determine a usage description of the to-be-identified asset device and corresponding to the content in the usage identification field. In this embodiment, the standard format of identification information and the specific storage location (that is, the field interval) of the identification information in a traffic packet are predefined. The first content in the application scenario identification field may be matched with the predefined application scenario mapping relationship, to determine the application scenario description, the second content in the location identification field may be matched with the predefined location mapping relationship, to determine the location description of the to-be-identified asset device, and the third content in the usage identification field may be matched with the predefined usage mapping relationship, to determine the usage description. The identification result includes an application scenario description, a location description, and a usage description. Similarly, when the combined field of the identification information in the standard format further includes another field for identifying an asset attribute (such as a system name, a system usage, a subsystem usage, or an asset device model), the application scenario mapping relationship correspondingly includes a corresponding attribute description, so that a corresponding asset attribute description may be determined based on content of these asset attributes, and the asset attribute description is added to the identification result.

Therefore, for the network traffic supporting a definition of the identification information in the standard format, the identification result including the application scenario description, the location description, and the usage description can be conveniently obtained based on the identification information.

Table 1 lists typical examples of the identification information in the standard format. The standard format includes an application scenario identification field, a location identification field, and a usage identification field. A field name of the application scenario identification field is a pre-string. The location identification field includes two parts, i.e., a building location and a room location. The usage identification field includes two parts, i.e., a device usage and a device number.

**Table 1**

| Field name | Character length | Description |
|---|---|---|
| Pre-string | 2 | Scenario |
| Location of building (Location_building) | 2 | Building location number |
| Room location (Location_room) | 4 | Device room number |
| Device usage (Device_usage) | 4 | Specific name of device |
| Device number (Device_No) | 3 | Device number |
| ... | | |

Table 2 lists examples of the mapping relationship between the pre-string and the scenario description. For example, when the pre-string of the identification information is "A0", it is determined, based on table 2, that the application scenario of the asset device is a building control scenario.

**Table 2**

| Pre-string | Description |
|---|---|
| A0 | Building control scenario |
| A1 | Chemical collecting and distributing control scenario |
| A2 | Discrete manufacturing scenario |
| A3 | Traffic and transportation scenario |
| ... | |

Table 3 lists examples of a mapping relationship between a value of a building location field and a building description. For example, when a character string in the building location field in the identification information is "B1", it may be determined that the asset device is no. 1 building.

**Table 3**

| Building location | Description |
|---|---|
| B1 | No. 1 building |
| B2 | No. 2 building |
| B3 | No. 3 building |
| B4 | No. 4 building |
| ... | |

Table 4 lists examples of a mapping relationship between a value of a room location field and a room location description. For example, when a character string in the location building field in the identification information is "R101", it may be determined that the asset device is no. 101 room.

**Table 4**

| Room location | Description |
|---|---|
| R101 | No. 101 room |
| R102 | No. 102 room |
| R103 | No. 103 room |
| R104 | No. 104 room |
| ... | |

Table 5 lists examples of a mapping relationship between a value of a device usage field and a device usage description. For example, when a character string in the device usage field in the identification information is "T", it may be determined that the asset device is a temperature sensor.

**Table 5**

| Device usage | Description |
|---|---|
| T | Temperature sensor |
| H | Humidity sensor |
| B | Barometer |
| ... | |

It is assumed that specific content of the identification information meeting the foregoing standard format is: "A0_B1_R101_T_001". Based on table 1 to table 5, it can be obtained that the identification result is shown in table 6.

**Table 6**

| Field name | Character length | Identification information | Description information |
|---|---|---|---|
| Pre-string | 2 | A0 | Building control system |
| Location building | 2 | B1 | No. 1 building |
| Location room | 4 | R101 | No. 101 room |
| Device usage | 1 | T | Temperature sensor |
| Device number | 3 | 001 | Device number 001 |

The foregoing exemplarily describes a typical example of the identification information in the standard format and the generated identification result. A person skilled in the art could realize that such the descriptions are merely exemplary and are not used to limit the protection scope of the embodiments of the present invention.

In an embodiment, step 102 specifically includes: extracting, when the protocol type of the network traffic does not support the definition of the identification information in the standard format (that is, a field definition about the identification information in the standard format is not extended in the protocol type), a feature group of the network traffic. The generating an identification result of the to-be-identified asset device based on the identification information in step 103 specifically includes: determining an application scenario of the to-be-identified asset device based on a matching result between the feature group and a predetermined scenario matching rule. In view of the above, for the network traffic not supporting a definition of the identification information in the standard format, the application scenario description can be determined by using the matching result between the feature group and the predetermined scenario matching rule.

In an embodiment, a generation manner of the scenario matching rule includes:
(1) generating the scenario matching rule based on a combination of at least two features in the feature group;
(2) generating the scenario matching rule based on a combination of at least two features in the feature group and a keyword in the location description; and
(3) generating the scenario matching rule based on a combination of at least two features in the feature group and a keyword in the usage description.

The feature group includes at least two of the following features: a network address; a program identifier; a common flag in the network traffic; a TCP port state; and a UDP port state. The generation manner of the scenario matching rule may be determined based on prior knowledge. A verification check may be performed on the generated scenario matching rule. For example, the scenario matching rule is verified based on a valid value range of a field variable.

Example (1): An example of a scenario matching rule generated based on a combination of a TCP port state and a program identifier is: when a TCP port state numbered 445 is enabled and a program identifier indicates that a traffic-related application program is WinCC software, the matching scenario is: a chemical collecting and distributing control scenario. In this example, the scenario matching rule is directly generated based on the feature combination in the feature group. This has an advantage of convenient implementation.

Example (2): An example of a scenario matching rule generated based on a TCP port state, a program identifier, and a keyword in a usage description may be: when the TCP port state numbered 445 is enabled, the program identifier indicates that a traffic-related application program is WinCC software, and the keyword in the usage description includes a "reaction oven", an "electrolytic bath", or a "crystallizing device", the matching scenario is: a chemical collecting and distributing control scenario. In this example, generating the scenario matching rule based on the feature combination in the feature group and the usage description keyword has an advantage of convenient implementation.

Example (3): An example of a scenario matching rule generated based on a TCP port state, a program identifier, and a keyword in a location description may be: when the TCP port state numbered 445 is enabled, the program identifier indicates that a traffic-related application program is WinCC software, and the keyword in the location description includes "a hybrid workshop", "a separate workshop", "a purification workshop", or "a storage tank", the matching scenario is: a chemical collecting and distributing control scenario. In this example, the scenario matching rule is generated based on the feature combination in the feature group and the location description keyword, to generate a more accurate rule.

In an embodiment, the obtaining identification information of the to-be-identified asset device includes: querying, when the protocol type of the network traffic does not support the definition of the identification information in the standard format and is included in a predetermined field interval mapping relationship, the field interval mapping relationship based on the protocol type, to determine a location field interval and a usage field interval that correspond to the protocol type, where the location field interval adaptively stores a location description of the to-be-identified asset device, and the usage field interval adaptively stores a usage description of the to-be-identified asset device; and the generating an identification result of the to-be-identified asset device based on the identification information includes: extracting the location description from the location field interval; and extracting the usage description from the usage field interval. Therefore, for the network traffic of which the protocol type does not conform to the predetermined type, the usage description and the location description can be conveniently extracted by using the field interval mapping relationship. Therefore, for the network traffic not supporting the identification information in the standard format, the usage description and the location description can be conveniently extracted by using the field interval mapping relationship.

A verification check may be performed on the location description and the usage description. For example, the location description and the usage description may be verified based on a valid value range of a field variable.

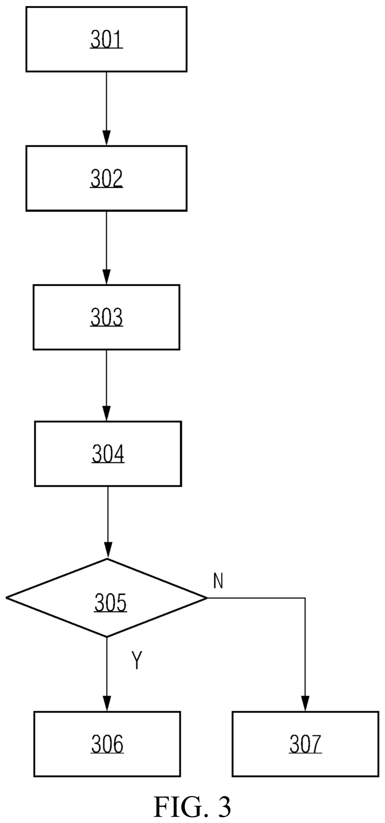

FIG. 3 is a schematic diagram of an asset identification process according to an embodiment of the present invention. As shown in FIG. 3, the method includes:
Step 301: Obtain network traffic related to a to-be-identified asset device. The protocol type of the network traffic does not support a definition of identification information in a standard format, and the protocol type of the network traffic has a record in a field interval mapping relationship.
Step 302: Extract a feature group of the network traffic and determine an application scenario description of the to-be-identified asset device based on a matching result between the feature group and a predetermined scenario matching rule.
Step 303: Query the field interval mapping relationship based on the protocol type, to determine a location field interval and a usage field interval that correspond to the protocol type.
Step 304: Read a location description from the location field interval and read a usage description from the usage field interval.
Step 305: Determine whether the location description and/or the usage description is successfully verified. If yes (corresponding to the "Y" branch), step 306 is performed; or otherwise (corresponding to the "N" branch), step 307 is performed.
Step 306: Display an identification result including the usage description, the location description, and the application scenario description and exit the process.
Step 307: Display the identification result including the application scenario description and exit the process.

In an embodiment, the method includes: when the protocol type of the network traffic does not support the definition of the identification information in the standard format and is not included in the field interval mapping relationship: determining, from the network traffic based on a predetermined location description keyword, a location field interval used for storing the location description; determining, from the network traffic based on a predetermined usage keyword, a usage field interval used for storing the usage description; and newly adding a mapping relationship between the location field interval and the protocol type and a mapping relationship between the usage field interval and the protocol type to the field interval mapping relationship.

In view of the above, for a protocol type that does not support a definition of identification information in a standard format and is not recorded in the field interval mapping relationship, the usage field interval and the location field interval can be obtained by parsing, and the mapping relationship with the protocol type is newly added to the field interval mapping relationship, thereby automatically expanding the field interval mapping relationship.

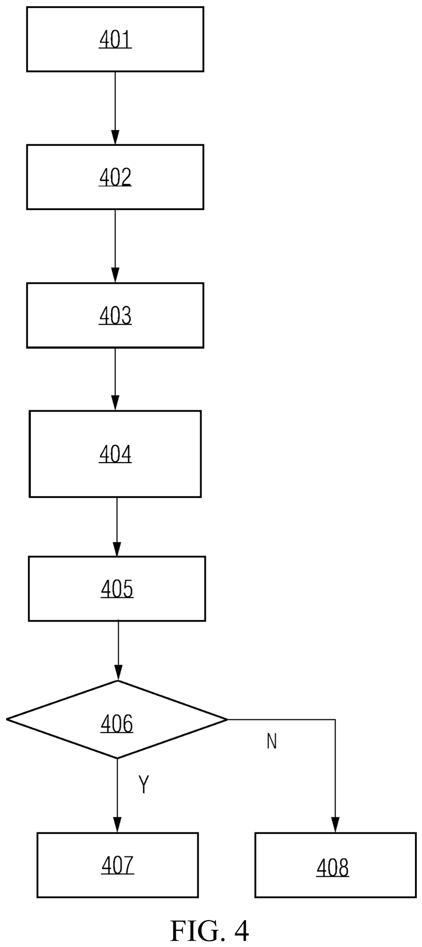

FIG. 4 is a second exemplary flowchart of an asset identification process according to an embodiment of the present invention.

Step 401: Obtain network traffic related to a to-be-identified asset device. A protocol type of the network traffic does not support a definition of identification information in a standard format, and the protocol type of the network traffic does not have a record in a field interval mapping relationship.

Step 402: Extract a feature group of the network traffic and determine an application scenario description of the to-be-identified asset device based on a matching result between the feature group and a predetermined scenario matching rule.

Step 403: Determine, from the network traffic and based on a predetermined location description keyword, a location field interval for storing the location description, and extract a location description from the location field interval. For example, content of the network traffic is queried for a keyword "room number", and after the keyword is hit, a location description field is located, and a location field interval for storing the location description is stored. For example, a specific packet type to which the location field pertains and a specific location of the location field in the packet type are recorded.

Step 404: Determine, from the network traffic and based on a predetermined usage description keyword, a location field interval for storing the usage description, and extract a usage description from the usage field interval. For example, content of the network traffic is queried for a keyword "temperature sensor", and after the keyword is hit, a usage description field is located, and a usage field interval for storing the location description is stored. For example, a specific packet type to which the usage field pertains and a specific location of the usage field in the packet type are recorded.

Step 405: Add, to the field interval mapping relationship, a mapping relationship between the location field interval and a protocol type and a mapping relationship between the usage field interval and the protocol type. Therefore, subsequently, when traffic of the protocol type is encountered again, the location field interval and the usage field interval may be directly determined based on the mapping relationship.

Step 406: Determine whether the location description and/or the usage description is successfully verified. If yes (corresponding to the "Y" branch), step 407 is performed; or otherwise (corresponding to the "N" branch), step 408 is performed.

Step 407: Display an identification result including the usage description, the location description, and the application scenario description and exit the process. Preferably, the identification result may further include attributes such as a system name, a system usage, a subsystem usage, and an asset device model.

Step 408: Display the identification result including the application scenario description and exit the process.

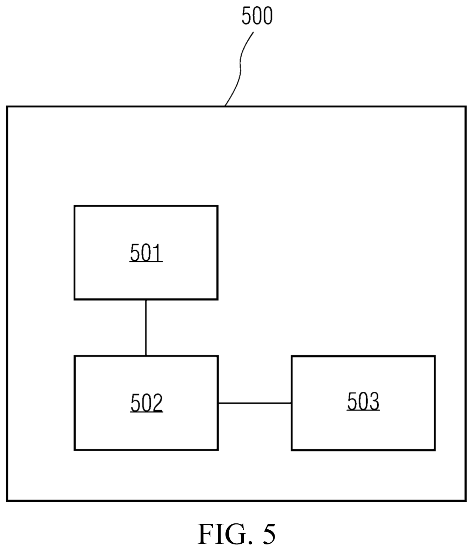

FIG. 5 is a structural diagram of an asset identification apparatus according to an embodiment of the present invention. As shown in FIG. 5, the asset identification apparatus 500 includes:
a traffic obtaining module 501, configured to obtain network traffic related to a to-be-identified asset device;
an information obtaining module 502, configured to extract identification information of the to-be-identified asset device based on the network traffic; and
a generation module 503, configured to generate an identification result of the to-be-identified asset device based on the identification information, where the identification result includes an application scenario description of the to-be-identified asset device.

In an embodiment, the to-be-identified asset device is an OT device and/or an IoT device.

The traffic obtaining module 501 is configured to obtain, by using a monitoring port on a switch connected to the OT device and/or the IoT device, mirror traffic of network traffic flowing through the switch within a predetermined time.

In an embodiment, the information obtaining module 502 is configured to obtain, when a protocol type of the network traffic supports a definition of identification information in a standard format, the identification information from a field interval in the network traffic and corresponding to a predetermined type, where the identification information is in the standard format, and the standard format includes an application scenario identification field, a location identification field, and a usage identification field; and the generation module 503 is configured to match first content in the application scenario identification field with a predefined application scenario mapping relationship, to determine an application scenario description of the to-be-identified asset device and corresponding to the first content; match second content in the location identification field with a predefined location mapping relationship, to determine a location description of the to-be-identified asset device and corresponding to the second content; and match third content in the usage identification field with a predefined usage mapping relationship, to determine a usage description of the to-be-identified asset device and corresponding to the content in the usage identification field.

In an embodiment, the information obtaining module 502 is configured to extract, when the protocol type of the network traffic does not support the definition of the identification information in the standard format, a feature group of the network traffic; and the generation module 503 is configured to determine an application scenario of the to-be-identified asset device based on a matching result between the feature group and a predetermined scenario matching rule.

In an embodiment, the information obtaining module 502 is configured to query, when the protocol type of the network traffic does not support the definition of the identification information in the standard format and is included in a predetermined field interval mapping relationship, the field interval mapping relationship based on the predetermined protocol type, to determine a location field interval and a usage field interval that correspond to the protocol type, where the location field interval adaptively stores a location description of the to-be-identified asset device, and the usage field interval adaptively stores a usage description of the to-be-identified asset device; and the generation module 503 is configured to extract the location description from the location field interval; and extract the usage description from the usage field interval.

In an embodiment, a generation manner of the scenario matching rule includes at least one of the following: generating the scenario matching rule based on the combination of at least two features in the feature group; generating the scenario matching rule based on a combination of at least two features in the feature group and a keyword in the location description; or generating the scenario matching rule based on a combination of at least two features in the feature group and a keyword in the usage description. The feature group includes at least two of the following features: a network address, a program identifier; a common flag in the network traffic; a TCP port state; and a UDP port state.

In an embodiment, the information obtaining module 502 is configured to: when the protocol type of the network traffic does not support the definition of the identification information in the standard format and is not included in the field interval mapping relationship: determine, from the network traffic based on a predetermined location description keyword, a location field interval used for storing the location description; determine, from the network traffic based on a predetermined usage keyword, a usage field interval used for storing the usage description; and newly add a mapping relationship between the location field interval and the protocol type and a mapping relationship between the usage field interval and the protocol type to the field interval mapping relationship.

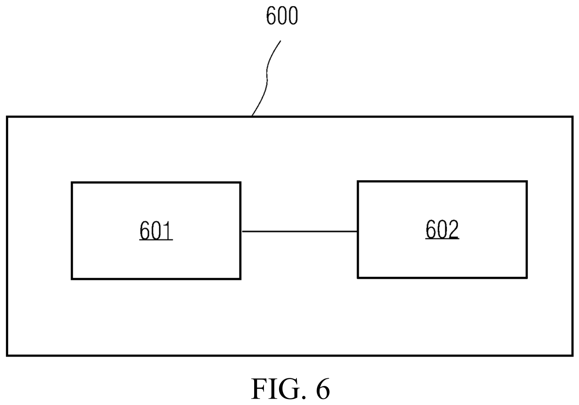

An embodiment of the present invention further provides an electronic device having a processor-memory architecture. FIG. 6 is a structural diagram of an electronic device according to an embodiment of the present invention. As shown in FIG. 6, an electronic device 600 includes a processor 601, a memory 602, and a computer program stored in the memory 602 and capable of being run on the processor 601. The computer program, when executed by the processor 601, implements any one of the foregoing asset identification methods. The memory 602 may be specifically implemented as various storage media such as an electrically erasable programmable read-only memory (EEPROM), a flash memory, and a programmable read-only memory (PROM). The processor 601 may be implemented to include one or more central processing units or one or more field programmable gate arrays, where the field programmable gate arrays integrate one or more central processing unit cores. Specifically, the central processing unit or the central processing unit core can be implemented as a CPU, an MCU, a DSP, or the like.

It should be noted that not all steps and modules in the procedures and the structural diagrams are necessary, and some steps or modules may be omitted according to an actual requirement. An execution sequence of the steps is not fixed and may be adjusted according to a requirement. Division of the modules is merely functional division for ease of description. During actual implementation, one module may be separately implemented by multiple modules, and functions of multiple modules may alternatively be implemented by a same module. These modules may be located in a same device, or may be located in different devices.

Hardware modules in the embodiments may be implemented in a mechanical manner or an electronic manner. For example, one hardware module may include a specifically designed permanent circuit or logic device (for example, a dedicated processor, such as an FPGA or an ASIC) for completing a specific operation. The hardware module may further include a programmable logic device or circuit (for example, including a general-usage processor or another programmable processor) configured temporarily by software and configured to perform a specific operation. The hardware module is specifically implemented in a mechanical manner, by using a dedicated permanent circuit, or by using a temporarily configured circuit (for example, configured by software), which may be decided according to consideration of costs and time.

The foregoing descriptions are merely preferred implementations of the present invention, and are not intended to limit the protection scope of the present invention. Any modification, equivalent replacement, or improvement made and the like within the spirit and principle of the present invention shall fall within the protection scope of the present invention.

## Claims

1. An asset identification method, comprising:
obtaining (101) network traffic related to a to-be-identified asset device;
obtaining (102) identification information of the to-be-identified asset device based on the network traffic; and
generating (103) an identification result of the to-be-identified asset device based on the identification information, wherein the identification result comprises an application scenario description of the to-be-identified asset device.

2. The method according to claim 1, wherein the to-be-identified asset device is an operation technology device and/or an Internet of Things device; and
the obtaining (101) network traffic related to a to-be-identified asset device comprises:
obtaining, by using a monitoring port on a switch connected to the operation technology device and/or the Internet of Things device, mirror traffic of network traffic flowing through the switch within a predetermined time.

3. The method according to claim 1, wherein
the obtaining (102) identification information of the to-be-identified asset device based on the network traffic comprises: extracting, when a protocol type of the network traffic supports a definition of identification information in a standard format, the identification information from a field interval in the network traffic and corresponding to a predetermined type, wherein the identification information is in the standard format, and the standard format comprises an application scenario identification field, a location identification field, and a usage identification field; and
the generating (103) an identification result of the to-be-identified asset device based on the identification information comprises:
matching first content in the application scenario identification field with a predefined application scenario mapping relationship, to determine an application scenario description of the to-be-identified asset device and corresponding to the first content;
matching second content in the location identification field with a predefined location mapping relationship, to determine a location description of the to-be-identified asset device and corresponding to the second content; and
matching third content in the usage identification field with a predefined usage mapping relationship, to determine a usage description of the to-be-identified asset device and corresponding to content in the usage identification field.

4. The method according to claim 3, wherein
the obtaining (102) identification information of the to-be-identified asset device comprises: extracting, when the protocol type of the network traffic does not support the definition of the identification information in the standard format, a feature group of the network traffic; and
the generating (103) an identification result of the to-be-identified asset device based on the identification information comprises: determining an application scenario description of the to-be-identified asset device based on a matching result between the feature group and a predetermined scenario matching rule.

5. The method according to claim 4, wherein
the obtaining (102) identification information of the to-be-identified asset device comprises: querying, when the protocol type of the network traffic does not support the definition of the identification information in the standard format and is comprised in a predetermined field interval mapping relationship, the field interval mapping relationship based on the protocol type, to determine a location field interval and a usage field interval that correspond to the protocol type, wherein the location field interval adaptively stores a location description of the to-be-identified asset device, and the usage field interval adaptively stores a usage description of the to-be-identified asset device; and
the generating (103) an identification result of the to-be-identified asset device based on the identification information comprises:
extracting the location description from the location field interval; and
extracting the usage description from the usage field interval.

6. The method according to claim 4, wherein
a generation manner of the scenario matching rule comprises at least one of the following:
generating the scenario matching rule based on a combination of at least two features in the feature group;
generating the scenario matching rule based on a combination of at least two features in the feature group and a keyword in the location description; or
generating the scenario matching rule based on a combination of at least two features in the feature group and a keyword in the usage description,
wherein the feature group comprises at least two of the following features: a network address; a program identifier; a common flag in the network traffic; a transmission control protocol port state; or a user datagram protocol port state.

7. The method according to claim 5, comprising:
when the protocol type of the network traffic does not support the definition of the identification information in the standard format and is not comprised in the field interval mapping relationship: determining, from the network traffic based on a predetermined location description keyword, a location field interval used for storing the location description; determining, from the network traffic based on a predetermined usage keyword, a usage field interval used for storing the usage description; and newly adding a mapping relationship between the location field interval and the protocol type and a mapping relationship between the usage field interval and the protocol type to the field interval mapping relationship.

8. An asset identification apparatus, comprising:
a traffic obtaining module (501), configured to obtain network traffic related to a to-be-identified asset device;
an information obtaining module (502), configured to extract identification information of the to-be-identified asset device based on the network traffic; and
a generation module (503), configured to generate an identification result of the to-be-identified asset device based on the identification information, wherein the identification result comprises an application scenario description of the to-be-identified asset device.

9. The apparatus according to claim 8, wherein the to-be-identified asset device is an operation technology device and/or an Internet of Things device; and
the traffic obtaining module (501) is configured to obtain, by using a monitoring port on a switch connected to the operation technology device and/or the Internet of Things device, mirror traffic of network traffic flowing through the switch within a predetermined time.

10. The apparatus according to claim 8, wherein
the information obtaining module (502) is configured to obtain, when a protocol type of the network traffic supports a definition of identification information in a standard format, the identification information from a field interval in the network traffic and corresponding to a predetermined type, wherein the identification information is in the standard format, and the standard format comprises an application scenario identification field, a location identification field, and a usage identification field; and
the generation module (503) is configured to match first content in the application scenario identification field with a predefined application scenario mapping relationship, to determine an application scenario description of the to-be-identified asset device and corresponding to the first content; match second content in the location identification field with a predefined location mapping relationship, to determine a location description of the to-be-identified asset device and corresponding to the second content; and match third content in the usage identification field with a predefined usage mapping relationship, to determine a usage description of the to-be-identified asset device and corresponding to the content in the usage identification field.

11. The apparatus according to claim 10, wherein
the information obtaining module (502) is configured to extract, when the protocol type of the network traffic does not support the definition of the identification information in the standard format, a feature group of the network traffic; and
the generation module (503) is configured to determine an application scenario description of the to-be-identified asset device based on a matching result between the feature group and a predetermined scenario matching rule.

12. The apparatus according to claim 11, wherein
the information obtaining module (502) is configured to query, when the protocol type of the network traffic does not support the definition of the identification information in the standard format and is comprised in a predetermined field interval mapping relationship, the field interval mapping relationship based on the protocol type, to determine a location field interval and a usage field interval that correspond to the protocol type, wherein the location field interval adaptively stores a location description of the to-be-identified asset device, and the usage field interval adaptively stores a usage description of the to-be-identified asset device; and
the generation module (503) is configured to extract the location description from the location field interval; and extract the usage description from the usage field interval.

13. The apparatus according to claim 11, wherein
a generation manner of the scenario matching rule comprises at least one of the following:
generating the scenario matching rule based on a combination of at least two features in the feature group;
generating the scenario matching rule based on a combination of at least two features in the feature group and a keyword in the location description; or
generating the scenario matching rule based on a combination of at least two features in the feature group and a keyword in the usage description,
wherein the feature group comprises at least two of the following features: a network address; a program identifier; a common flag in the network traffic; a transmission control protocol port state; or a user datagram protocol port state.

14. The apparatus according to claim 12, wherein
the information obtaining module (502) is configured to: when the protocol type of the network traffic does not support the definition of the identification information in the standard format and is not comprised in the field interval mapping relationship: determine, from the network traffic based on a predetermined location description keyword, a location field interval used for storing the location description; determine, from the network traffic based on a predetermined usage keyword, a usage field interval used for storing the usage description; and newly add a mapping relationship between the location field interval and the protocol type and a mapping relationship between the usage field interval and the protocol type to the field interval mapping relationship.

15. An electronic device, comprising:
a processor (601); and
a memory (602), configured to store executable instructions of the processor (601);
the processor (601) being configured to: read the executable instructions from the memory (602), and execute the executable instructions to implement the asset identification method according to any one of claims 1 to 7.

16. A computer-readable storage medium, having computer instructions stored thereon, wherein the computer instructions, when executed by a processor, implement the log-based method for identifying an attack link according to any one of claims 1 to 7.

17. A computer program product, comprising a computer program, wherein the computer program, when executed by a processor, implements the asset identification method according to any one of claims 1 to 7.
